(19) Europäisches Patentamt
European Patent Office
Office européen des brevets

(11) Publication number : **0 395 258 B1**

(12) # EUROPEAN PATENT SPECIFICATION

(45) Date of publication of patent specification :
**09.03.94 Bulletin 94/10**

(51) Int. Cl.$^5$ : **C10M 159/12,**
// (C10M159/12, 133:06, 135:04, 137:02), C10N30:12

(21) Application number : **90303913.9**

(22) Date of filing : **11.04.90**

(54) **Process for preparing sulfurized branched alkyl phosphite lubricant additive.**

The file contains technical information submitted after the application was filed and not included in this specification

(30) Priority : **14.04.89 US 337913**

(43) Date of publication of application :
**31.10.90 Bulletin 90/44**

(45) Publication of the grant of the patent :
**09.03.94 Bulletin 94/10**

(84) Designated Contracting States :
**BE DE ES FR GB IT**

(56) References cited :
**WO-A-88/03554**
**US-A- 2 447 288**
**US-A- 4 207 195**
**US-A- 4 717 491**
**US-A- 4 744 912**

(73) Proprietor : **ETHYL PETROLEUM ADDITIVES, INC.**
**20 South Fourth Street**
**St. Louis Missouri 63102-1886 (US)**

(72) Inventor : **Degonia, David John**
**2828 Sunset Drive**
**Granite City, Illinois 62040 (US)**
Inventor : **Griffin, Paul Gaynor**
**321 Louise Drive**
**Collinsville, Illinois 62234 (US)**

(74) Representative : **Collier, Jeremy Austin Grey et al**
**J.A.KEMP & CO. 14, South Square Gray's Inn**
**London WC1R 5LX (GB)**

**EP 0 395 258 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to a process for preparing sulfurized anti-wear lubricant additives and more specifically to the preparation of such additives, which provide improved copper corrosion life to lubricants and are prepared by reacting a sulfurized olefin, a branched chain dialkyl hydrogen phosphite and an amine at temperatures of from 45° to 75°C.

U.S. Patent 4,744,912 discloses antiwear/anticorrosion additives prepared by reacting a sulfurized olefin, a dialkyl hydrogen phosphite and an alkyl primary amine. Both straight and branched chain dialkyl phosphites are disclosed but it is alleged that a high reaction temperature (90°-130°C) is critical for achieving effective anticorrosion properties and examples, which employ only a straight chain dibutyl phosphite, are included to illustrate this.

U.S. Patent 4,752,416 discloses sulfurized compositions which are prepared from phosphite esters in which one alkyl group must be a straight chain and the other alkyl group must be a branched chain.

Unexpectedly, we have found that a lubricant additive which provides improved anticorrosion life properties to lubricants can be prepared at temperatures below those alleged to be critical in U.S. Patent 4,744,912 by using a dialkyl hydrogen phosphite in which both alkyl groups have a branched chain.

In accordance with this invention, there is provided a process of preparation of a lubricant additive comprising reacting a sulfurized olefin with a branched chain dialkyl hydrogen phosphite and an amine at a temperature of from 45° to 75°C. Also provided are lubricants comprising a major amount of an oil of lubricating viscosity and a minor antiwear/anticorrosion amount of lubricant additive produced by the process of the invention.

Sulfurized olefins useful in the invention are prepared from aliphatic monoolefins which contain from 2 to 8 carbon atoms, preferably 3 to 6 carbon atoms and most preferably isobutylene. The sulfurized olefins can be prepared as known in the art, for example, as described in U.S. Patents 4,204,969 and 4,563,302. Preferably the sulfurized olefins contain from 40 to 50 weight percent sulfur.

Suitable dialkyl hydrogen phosphites are those in which the alkyl groups are branched and contain from 3 to 20 carbon atoms and preferably 4 to 8 carbon atoms. Illustrative compounds of this type include di-isopropyl hydrogen phosphite, di-isobutyl hydrogen phosphite, di-secondary-butyl hydrogen phosphite, di-neopentyl hydrogen phosphite, di-(2-ethylhexyl) hydrogen phosphite, di-(2,6-di-methylheptyl) hydrogen phosphite, di-(2-methylheptyl) hydrogen phosphite and di-(2,2,4-trimethylpentyl) hydrogen phosphite. The compounds can be prepared as known in the art, for example, by reacting phosphorus trichloride with a branched chain alkyl alcohol. Such phosphite esters can be represented by the formula:

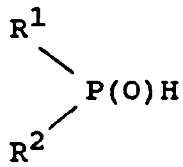

where $R^1$ and $R^2$ are, independently, branched chain alkyl groups having 3 to 20 carbon atoms.

The esters having mixed alkyl groups are prepared, for example, by reacting phosphorous acid with the desired mixture of branched chain alcohols.

The alkyl groups can be substituted with non-hydrocarbon substituents which do not alter the predominantly hydrocarbon character of the groups such as halo, hydroxy, nitro, cyano, alkoxy, or acyl.

Amines useful in the invention include saturated or unsaturated hydrocarbyl amines represented by the formula:

$$HNR_3R_4$$

where $R_3$ can be hydrogen and $R_3$ and $R_4$ can be independently selected from alkyl, cycloalkyl, or alkenyl radicals, including substituted moieties thereof substituted with non-hydrocarbon substituents which do not alter the predominantly hydrocarbon character of the groups such as halo, hydroxy, nitro, cyano, alkoxy, or acyl, having 1 to 30 carbon atoms. Preferred are primary alkyl or alkenyl amines having 4 to 22 carbon atoms such as, for example, n-butylamine, n-hexylamine, n-octylamine, n-dodecylamine, n-octadecylamine, oleylamine, 2-ethyl-n-hexylamine, t-butylamine, and t-octylamine. Mixtures of such amines as well as commercially available mixed amines can also be used such as those derived from natural products, e.g., cocoamine and tallow amine, which comprise various mixtures of amines containing from 12 to 22 carbon atoms, i.e. $C_{12}$-$C_{14}$, $C_{16}$-$C_{18}$ and $C_{16}$-$C_{22}$ mixtures. Cycloalkyl amines preferably have 4 to 6 carbon atoms in the ring. Examples of such compounds include cyclohexylamine, aminomethylcyclohexane, cyclobutylamine, and cyclopentylamine.

The ingredients are reacted in amounts of from 60 to 90 weight percent sulfurized olefin, 5 to 20 weight percent phosphite and 5 to 20 weight percent amine based on the total weight of reactants (preferred 70-85 weight percent sulfurized olefin, 5 to 15 weight percent phosphite and 5 to 15 weight percent amine). The improved products of the invention can be prepared at temperatures of from 45° to 75°C. Higher temperatures are unnecessary. Preferred temperatures range from 50°-65°C. The reaction times will vary, depending upon the temperature and total amount of reactants, from a few minutes to 4 hours or more. Usually times of from 30 minutes to 2 hours are sufficient when using the preferred temperatures.

The products resulting from the process of the invention are added to lubricant compositions such as process of the lubricating oils and greases in amounts which are effective to provide the necessary antiwear/anticorrosion life properties to the lubricant. In general, amounts of from 0.05 to 20 weight percent (preferred 0.2 to 10 weight percent) based on the weight of lubricant composition are effective. The products are useful in lubricant formulations which also contain conventional oil additive ingredients such as, for example, dispersants such as alkenylsuccinimides, soaps or detergents such as neutral or overbased alkaline earth metal alkylaryl sulfonates, demulsifiers such as poly(oxyethylene-propylene) block polymers, antifoam agents such as polydimethyl silicones or polyethyl-octyl acrylates, antioxidants such as dialkyl diphenyl amines or hindered phenols, metal deactivators such as thiadiazoles, antiwear agents or friction reducers such as sulfurized fatty esters, alkyl phosphates or long chain amides, amines or dimer acid esters, rust or corrosion inhibitors such as benzotriazoles, and viscosity index improvers such as polymethacrylate or ethylene-propylene copolymers.

The lubricants include a major portion of a base oil of any suitable lubricating viscosity range, such as about 7.5 to 1320 X $10^{-6}m^2/s$ at 38°C (50 to 6,000 SUS at 100°F) and preferably about 1.5 to 55 X $10^{-6}$ $m^2/s$ at 99°C (30 to 250 SUS at 210°F), which can be either a mineral oil or a synthetic oil such as olefin oligomers or synthetic esters such as the alkyl esters of dicarboxylic acid and fattv acid esters of polyols. The additives produced by the process of the invention are particularly useful in gear oil formulations. Finished gear oil lubricants generally have viscosities in the range of from about 55 to 550 X $10^{-6}$ $m^2/s$ (250 to 2,500 SUS) at 38°C.

The additives produced by the process of the invention are usually formulated and sold as additive concentrates which contain 30 to 70 weight percent additive based on the total weight of concentrate which also can contain 10 to 50 weight percent diluent oil and 0 to 60 weight percent of other conventional oil additive ingredients which preferably include from 1 to 5 weight percent of total concentrate of metal deactivators.

The invention is further illustrated by, but is not intended to be limited to, the following examples wherein parts are parts by weight unless otherwise indicated.

Example 1

Sulfurized isobutylene, 123 grams, containing about 46 weight percent sulfur; di-isobutyl hydrogen phosphite, 16.36 grams; $C_{16}$-$C_{18}$ mixed primary amine, 20.36 grams; n-octyl amine 1.82 grams; tolyltriazole, 0.18 grams; and #5 process oil, 4.74 grams were mixed and heated with stirring at 63° to 67°C for 30 minutes. Tolyltriazole is a corrosion inhibitor which does not interfere with the reaction.

Example 2

Example 1 was repeated except that the diisobutyl hydrogen phosphite was replaced with 25.8 grams of di-isooctyl hydrogen phosphite.

Fully formulated gear oil additives containing the total products of Examples 1 and 2 were prepared which included 3.18 grams of the metal deactivator, 2-alkyldithio-5-mercapto-1,3,4-thiadiazole, an additional 18.16 grams of #5 process oil and other ingredients including anti-wear, demulsifier, defoamer, and rust inhibitor materials. The additives were stored at 55°C. Beginning on the eighth day, samples were removed and evaluated in the ASTM D-130 Copper Corrosion Test along with a similar additive prepared using a reaction product of amine, sulfurized isobutylene and di-n-butyl phosphite, prepared according to the process of Example 1, for comparison purposes. The results are given in Table I below.
[In the ASTM D-130 copper corrosion test the results are reported on a scale from 1a to 3c, 1a being the best.]

## TABLE I

## ASTM D-130

## COPPER CORROSION

| Days Stored at 55°C | Comparison (n-butyl) | Example 1 (isobutyl) | Example 2 (isooctyl) |
|---|---|---|---|
| 8 | 1b | 1b | 1b |
| 9 | 1b | 1b | 1b |
| 10 | 1b | 1a | 1a |
| 11 | 2b | 1b | 1b |
| 12 | 2a | 1b | 1b |
| 13 | 2c | 1b | 1b |
| 14 | 2b | 1b | 1b |
| 15 | 2b | 1b | 1b |
| 16 | 2b | 1b | 1b |
| 17 | 2c | 1b | 1b |
| 18 | 2c | 1b | 1b |
| 19 | 2c | 1b | 1b |
| 20 | 2c | 1b | 1b |
| 22 | 3b | 2b | 2c |
| 26 | 2c | 2c | 2c |

The 55°C temperature accelerates the deterioration of the additive and products giving test results of 1b or better are considered to be stable. The results of the test show that the products prepared from the branched alkyl phosphites gave additives having significantly better copper corrosion test life (20 vs 10 days at 55°C) compared to the straight chain alkyl phosphite product.

Example 3

Sulfurized isobutylene, 92.25 grams, containing about 46 weight percent sulfur; di-neopentyl hydrogen phosphite, 14.04 grams; $C_{16}$-$C_{18}$ mixed primary amine, 15.27 grams; n-octylamine 1.37 grams; tolyltriazole 0.13 grams; and #5 process oil, 3.55 grams were mixed and heated with stirring at 65°C for 30 minutes.

Fully formulated gear oil additives were prepared using the product of Example 3 and, for comparison purposes, a product made by the process of Example 3 except that the di-neopentyl hydrogen phosphite was replaced with 12.27 grams of di-n-butyl phosphite. The additives contained 2.39 grams of 2-alkyldithio-5-mercapto-1,3,4-thiadiazole and 13.62 grams of additional #5 process oil along with antiwear, demulsifier, defoamer and rust inhibitor materials. The additives were stored at 55°C and evaluated in the ASTM D-130 Copper Corrosion Test. The results are given in Table II below. The product prepared with di-neopentyl phosphite gave a 1b or better result for 21 days vs 9 days for the di-n-butyl phosphite.

TABLE II

ASTM D-130

COPPER CORROSION

| Days Stored at 55°C | Comparison | Example 3 |
|---|---|---|
| Alkyl Phosphite Used | n-butyl | neo-pentyl |
| Initial | 1b | 1a |
| 8 | 1b | 1a |
| 9 | 1a | 1a |
| 10 | 2c | 1b |
| 11 | 2c | 1b |
| 14 | 3b | 1b |
| 15 | 2b | 1b |
| 16 | 2c | 1b |
| 17 | 2c | 1b |
| 18 | 2c | 1a |
| 19 | 2c | 1b |
| 20 | 3b | 1b |
| 21 | 2c | 1b |
| 22 | 3b | 2c |
| 23 | 3b | 2c |

Example 4

This example demonstrates the effect of using the products of the invention with different amounts of metal deactivator.

4a. Sulfurized isobutylene, 61.5 grams, containing about 46 weight percent sulfur; di-isobutyl hydrogen phosphite, 8.18 grams; $C_{16}$-$C_{18}$ mixed primary amine, 10.18 grams; n-octylamine 0.91 grams; tolythiazole, 0.09 grams; and #5 process oil, 2.37 grams were mixed and heated for 30 minutes at 65°C with stirring. A fully formulated gear oil additive was prepared from the product. The additive contained 1.54 weight percent of 2-alkyldithio-5-mercapto-1,3,4-thiadiazole.

4b and 4c. The procedure described in Example 4a was repeated to prepare two additives which varied in composition only with respect to metal deactivator content which was 1.04 weight percent in Example 4b and 0.54 weight percent in Example 4c.

A comparison sample was prepared using di-n-butyl phosphite using the same processing conditions and the same proportions of ingredients to provide an additive concentrate containing 1.54 weight percent metal deactivator. Twice as much sample was prepared compared to Example 4. The additives were stored at 55°C and the results of ASTM D-130 testing of each additive are given in Table III.

TABLE III

ASTM D-130

COPPER CORROSION

| Days Stored at 55°C | Comparison | Example 4A | Example 4B | Example 4C |
|---|---|---|---|---|
| Alkyl Phosphite Used | n-butyl | isobutyl | isobutyl | isobutyl |
| Wt. % Metal Deactivator | 1.54 | 1.54 | 1.04 | 0.54 |
| 6 | 1b | 1b | 1a | 1a |
| 7 | 1b | 1a | 1a | 1a |
| 8 | 1b | 1b | 1b | 1b |
| 9 | 1b | 1b | 1b | 2a |
| 10 | 1b | 1b | 1b | 1b |
| 11 | 2c | 1b | 1b | 3b |
| 12 | 2c | 1b | 1b | 3b |
| 13 | 3b | 1b | 1b | 3a |
| 17 | N/R* | 1b | 1b | 3b |
| 20 | N/R | 1b | 1b | 3b |

*N/R = analysis not run

The results reported in Table III show that metal deactivator levels can be significantly reduced, i.e. from 1.54 weight percent to 1.04 weight percent while achieving even better copper corrosion life results and to 0.54 weight percent while achieving at least equivalent copper corrosion life results by using the branched chain dialkyl phosphite additive rather than the straight chain dialkyl phosphite. A better product, therefore, can be obtained at over-all cost savings.

## Claims

1. A process for preparing a lubricant additive comprising reacting a sulfurized olefin with a branched chain dialkyl hydrogen phosphite and an amine at a temperature of from 45° to 75°C.

2. A process according to claim 1 wherein the reactants are present in proportion of from 60 to 90 weight percent sulfurized olefin, from 5 to 20 weight percent branched chain dialkyl hydrogen phosphite and from 5 to 20 weight percent amine based on the total weight of said reactants.

3. A process according to claim 1 or 2 wherein the sulfurized olefin is a sulfurized olefin prepared from an aliphatic monoolefin which contains from 2 to 8 carbon atoms.

4. A process according to claim 1 or 2 wherein the sulfurized olefin is sulfurized isobutylene.

5. Process according to any one of claims 1 to 4 wherein the branched chain dialkyl phosphite is represented by the formula:

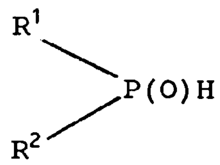

where $R^1$ and $R^2$ are, independently, branched chain alkyl groups having 3 to 20 carbon atoms.

6. Process according to claim 5 wherein the branched chain dialkyl phosphite is diisopropyl hydrogen phosphite, diisobutyl hydrogen phosphite, di-secondary-butyl hydrogen phosphite, di-neopentyl hydrogen phosphite, di-(2-ethylhexyl) hydrogen phosphite, di-(2,6-dimethylheptyl) hydrogen phosphite, di-(2-methylheptyl) hydrogen phosphite or di-(2,2,4-trimethylpentyl) hydrogen phosphite.

7. Process according to any one of claims 1 to 6 wherein the amine is represented by the formula $HNR_3R_4$ where $R_3$ can be hydrogen and $R_3$ and $R_4$ can be independently selected from the group consisting of alkyl, cycloalkyl, and alkenyl radicals having 1 to 30 carbon atoms.

8. A process according to claim 1 or 2 wherein the sulfurized olefin is prepared from isobutylene, the branched chain dialkyl hydrogen phosphite is either diisobutyl hydrogen phosphite, di-isooctyl hydrogen phosphite or di-neopentyl hydrogen phosphite, and the amine comprises a mixture of primary alkyl and alkenyl amines having from 12-22 carbon atoms.

9. A process according to any one of claims 1 to 8 wherein the temperature is from 50° to 65°C.

10. An additive concentrate containing, based on the total weight of concentrate, from 30 to 70 weight percent of an additive produced by the process of any one of claims 1 to 9, from 10 to 50 weight percent of a diluent oil, and 1 to 60 weight percent of other conventional oil additive ingredients including from 1 to 5 weight percent of total concentrate of metal deactivators.

11. A lubricant composition comprising an oil of lubricating viscosity and a lubricant additive concentrate as claimed in claim 10 in a concentration to provide 0.05 to 20 weight percent of the additive produced by the process of any of claims 1 to 9.

## Patentansprüche

1. Verfahren zur Herstellung eines Schmiermitteladditivs, bei dem ein sulfuriertes Olefin mit einem verzweigtkettigen Dialkylhydrogenphosphit und einem Amin bei einer Temperatur von 45 °C bis 70 °C umgesetzt wird.

2. Verfahren nach Anspruch 1, bei dem die Reaktanten in einem Verhältnis von 60 bis 90 Gew.% sulfuriertes Olefin, 5 bis 20 Gew.% verzweigtkettiges Dialkylhydrogenphosphit und 5 bis 20 Gew.% Amin, bezogen auf das Gesamtgewicht der Reaktanten vorliegen.

3. Verfahren nach einem der Ansprüche 1 oder 2, bei dem das sulfurierte Olefin ein aus einem aliphatischen Monoolefin, das 2 bis 8 Kohlenstoffatome enthält, hergestelltes sulfuriertes Olefin ist.

4. Verfahren nach einem der Ansprüche 1 oder 2, bei dem das sulfurierte Olefin sulfuriertes Isobutylen ist.

5. Verfahren nach einem der Ansprüche 1 bis 4, bei dem das verzweigtkettige Dialkylphosphit die Formel

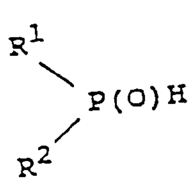

aufweist,
wobei $R^1$ und $R^2$ unabhängig voneinander verzweigtkettige Alkylgruppen mit 3 bis 20 Kohlenstoffatomen sind.

6. Verfahren nach Anspruch 5, dadurch gekennzeichnet, daß das verzweigtkettige Dialkylphosphit, Diisopropylhydrogenphosphit, Diisobutylhydrogenphosphit, Di-sec-butylhydrogenphosphit, Dineopentylhydrogenphosphit, Di-(2-ethylhexyl)-hydrogenphosphit, Di-(2,6-dimethylheptyl)-hydrogenphosphit, Di-(2-methylheptyl)-hydrogenphosphit oder Di-(2,3,4-trimethylpentylhydrogenphosphit ist.

7. Verfahren nach einem der Ansprüche 1 bis 6, dadurch gekennzeichnet, daß das Amin die Formel $HNR_3R_4$ aufweist, wobei $R_3$ Wasserstoff sein kann und $R_3$ und $R_4$ unabhängig voneinander aus der Gruppe: Alkyl-, Cycloalkyl- und Alkenylradikalen mit 1 bis 30 Kohlenstoffatomen ausgewählt werden können.

8. Verfahren nach einem der Ansprüche 1 oder 2, dadurch gekennzeichnet, daß das sulfurierte Olefin aus Isobutylen hergestellt wird, das verzweigtkettige Dialkylhydrogenphosphit entweder Diisobutylhydrogenphosphit, Diisooctylhydrogenphosphit oder Dineopentylhydrogenphosphit ist, und das Amin ein Gemisch primärer Alkyl- und Alkenylamine mit 12 bis 22 Kohlenstoffatomen ist.

9. Verfahren nach einem der Ansprüche 1 bis 8, dadurch gekennzeichnet, daß die Temperatur 50 °C bis 60 °C beträgt.

10. Additivkonzentrat, enthaltend, bezogen auf das Gesamtgewicht des Konzentrats, 30 bis 70 Gew.% eines Additivs, hergestellt nach einem Verfahren gemäß einem der Ansprüche 1 bis 9, 10 bis 50 Gew.% eines Verdünnungsöls und 1 bis 60 Gew.% andere übliche Additivbestandteile einschließlich 1 bis 5 Gew.% des Gesamtkonzentrats an Metalldeaktivatoren.

11. Schmiermittelzusammensetzung, enthaltend ein Öl mit Schmiermittelviskosität und ein Schmiermitteladditivkonzentrat nach Anspruch 10, das in einer Konzentration von 0,05 bis 20 Gew.% vorliegt und nach dem Verfahren gemäß einem der Ansprüche 1 bis 9 hergestellt wurde.

## Revendications

1. Procédé de préparation d'un additif pour lubrifiant, comprenant la réaction d'une oléfine sulfurée avec un phosphite acide de dialkyle à chaîne ramifiée et une amine à une température de 45° à 75°C.

2. Procédé suivant la revendication 1, dans lequel les corps réactionnels sont présents en un rapport de 60 à 90 % en poids d'oléfine sulfurée, 5 à 20 % en poids de phosphite acide de dialkyle à chaîne ramifiée et 5 à 20 % en poids d'amine sur la base du poids total desdits corps réactionnels.

3. Procédé suivant la revendication 1 ou 2, dans lequel l'oléfine sulfurée est une oléfine sulfurée préparée à partir d'une mono-oléfine aliphatique qui contient 2 à 8 atomes de carbone.

4. Procédé suivant la revendication 1 ou 2, dans lequel l'oléfine sulfurée consiste en isobutylène sulfuré.

5. Procédé suivant l'une quelconque des revendications 1 à 4, dans lequel le phosphite de dialkyle à chaîne ramifiée est représenté par la formule :

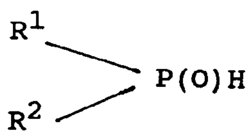

dans laquelle $R^1$ et $R^2$ représentent, indépendamment, des groupes alkyle à chaîne ramifiée ayant 3 à 20 atomes de carbone.

6. Procédé suivant la revendication 5, dans lequel le phosphite de dialkyle à chaîne ramifiée est le phosphite acide de diisopropyle, le phosphite acide de diisobutyle, le phosphite acide de di-sec.-butyle, le phosphite

acide de di-néopentyle, le phosphite acide de di-(2-éthylhexyle), le phosphite acide de di-(2,6-diméthylheptyle), le phosphite acide de di-(2-méthylheptyle) ou le phosphite acide de di-(2,2,4-triméthylpentyle).

7. Procédé suivant l'une quelconque des revendications 1 à 6, dans lequel l'amine est représentée par la formule $HNR_3R_4$ dans laquelle $R_3$ peut représenter l'hydrogène et $R_3$ et $R_4$ peuvent être choisis indépendamment entre des radicaux alkyle, cycloalkyle et alcényle ayant 1 à 30 atomes de carbone.

8. Procédé suivant la revendication 1 ou 2, dans lequel l'oléfine sulfurée est préparée à partir d'isobutylène, le phosphite acide de dialkyle à chaîne ramifiée est le phosphite acide de diisobutyle, le phosphite acide de diisooctyle ou le phosphite acide de di-néopentyle, et l'amine consiste en un mélange d'alkyl- et d'alcénylamines primaires ayant 12 à 22 atomes de carbone.

9. Procédé suivant l'une quelconque des revendications 1 à 8, dans lequel la température est comprise dnas l'intervalle de 50 à 65°C.

10. Concentré d'additif contenant, sur la base du poids total du concentré, 30 à 70 % en poids d'un additif produit par le procédé suivant l'une quelconque des revendications 1 à 9, 10 à 50 % en poids d'une huile diluante et 1 à 60 % en poids d'autres ingrédients classiques d'additifs d'huiles comprenant 1 à 5 %, en poids du concentré total, de désactivateurs de métaux.

11. Composition lubrifiante comprenant une huile de viscosité propre à la lubrification et un concentré d'additif pour lubrifiant suivant la revendication 10 en une concentration choisie de manière à fournir 0,05 à 20 % en poids de l'additif produit par le procédé suivant l'une quelconque des revendications 1 à 9.